# EUROPEAN PATENT APPLICATION

(11) **EP 4 651 546 A1**
(43) Date of publication of application: **19.11.2025**
(21) Application number: 25175627.6
(22) Date of filing: 12.05.2025
(51) Int. Cl.: H04W 24/02, H04B 7/08, H04W 24/10

(54) **SYSTEM AND METHOD FOR CONFIGURATION OF AI/ML UE-SIDED MODEL FOR BEAM MANAGEMENT**

(30) Priority: 17.05.2024 US 202463649008 P; 25.04.2025 US 202519189764
(71) Applicant: Samsung Electronics Co., Ltd., Suwon-si, Gyeonggi-do 16677 (KR)
(72) Inventor: HEO, Youn Hyoung, San Jose, CA, 95134 (US)
(74) Representative: Kuhnen & Wacker Patent- und Rechtsanwaltsbüro PartG mbB

(57) **Abstract**

A system and a method performed by a UE in a wireless communication system includes receiving, from a base station, a message corresponding to a data collection request by the UE; transmitting, to the base station, the data collection request with, at least one of, a preferred configuration or time interval; receiving, from the base station, a response to enable UE data collection including a resource configuration and a condition identifier in response to the data collection request; and performing data collection by measuring the resource configuration.

## Description

### TECHNICAL FIELD

The disclosure generally relates to wireless communication systems employing artificial intelligence (AI) and machine learning (ML). More particularly, the subject matter disclosed herein relates to improvements in procedures and signaling for network (NW)-side additional conditions in user equipment (UE)-sided AI/ML models for beam management use cases.

### SUMMARY

3rd Generation Partnership Project (3GPP) radio access NW (RAN) has introduced AI/ML-based features for new radio (NR) air interface. Specifically, in Release-19, 3GPP supports both UE-sided and NW-sided AI/ML models, where UE-sided models are trained by UE vendors using data measured from specific NW configurations. During inference, these models are applied to cells whose configurations align with those used during training. A discrepancy between training and inference conditions, such as differences in beam codebooks and beam indexing or mapping between subsets of beams, can degrade model performance.

To solve this problem, previous approaches provide NW-side additional conditions implicitly through an associated identification (ID). However, these methods do not clearly define the procedures for ID assignment, validation, and data acquisition for training specific to a cell or base station (gNB).

To overcome these issues, embodiments described herein provide improved signaling and procedures to manage UE data collection based on NW-provided associated IDs. In particular, detailed procedures for assigning IDs, validating NW-side conditions, and determining applicable AI/ML functionalities based on these IDs are disclosed. Embodiments further propose handling data collection during handovers, ensuring model consistency and performance.

The above approaches improve on previous solutions by clearly defining the conditions under which data collection requests are triggered, mechanisms for updating and validating NW-side conditions, and procedures for managing AI/ML model training during handovers.

According to an embodiment, a method performed by a UE in a wireless communication system includes receiving, from a base station, a message corresponding to a data collection request by the UE; transmitting, to the base station, the data collection request with, at least one of, a preferred configuration or time interval; receiving, from the base station, a response to enable UE data collection including a resource configuration and a condition identifier in response to the data collection request; and performing data collection by measuring the resource configuration.

According to another embodiment, a method performed by a base station in a wireless communication system includes transmitting, to a UE, a message corresponding to a data collection request by the UE; receiving, from the UE, the data collection request with at least one of a preferred configuration or time interval; transmitting, to the UE, a response to enable UE data collection including a resource configuration and a condition identifier in response to the data collection request; and enabling data collection at the UE by measuring the resource configuration.

According to another embodiment, a non-transitory computer-readable medium storing instructions is provided. The instructions, when executed by one or more processors of a UE in a wireless communication system, cause the UE to receive, from a base station, a message corresponding to a data collection request by the UE; transmit, to the base station, the data collection request with, at least one of, a preferred configuration or time interval; receive, from the base station, a response to enable UE data collection including a resource configuration and a condition identifier in response to the data collection request; and perform data collection by measuring the resource configuration.

### BRIEF DESCRIPTION OF THE DRAWING

In the following section, the aspects of the subject matter disclosed herein will be described with reference to exemplary embodiments illustrated in the figures, in which:
FIG. 1 illustrates a transmitting device or a receiving device in a communication system, according to an embodiment;
FIG. 2 illustrates an exemplary NW environment depicting UE-sided AI/ML model training with associated NW-side conditions, according to an embodiment;
FIG. 3 illustrates signaling exchanges between a UE and a gNB for data collection, according to an embodiment;
FIG. 4 illustrates signaling exchanges between a UE and a gNB for configuration and/or activation of applicable functionalities, according to an embodiment;
FIG. 5 illustrates signaling exchanges for an exemplary gNB handover scenario, according to an embodiment;
FIG. 6A is a flowchart illustrating a method performed by a UE for beam management model training, according to an embodiment;
FIG. 6B is a flowchart illustrating a method performed by a base station for supporting beam management model training at a UE, according to an embodiment;
FIG. 7 is a block diagram of an electronic device in a NW environment, according to an embodiment; and
FIG. 8 is a system including a UE and a base station gNB, in communication with each other, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts or modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

"Module" as used herein refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

"Data collection request" as used herein refers to a message or command transmitted by the UE to a base station indicating that the UE seeks measurement resources for AI/ML model training. Some examples of "data collection request" are radio resource control (RRC) messages generated when certain predefined conditions are met.

"Resource configuration" as used herein refers to the set of parameters or instructions provided by the base station that enables the UE to collect specific data used in AI/ML model training. Some examples of "resource configuration" are channel state information reference signals (CSI-RS) allocations, time intervals for measurement, or beam measurement specifications that the UE follows while gathering training data.

"Condition ID" (also referred to as "associated ID") as used herein refers to an identifier conveyed by the network to denote one or more additional conditions under which an AI/ML model should be trained or applied. Some examples of "condition ID" are beam patterns or codebooks associated with particular cells, cell identifiers that distinguish different coverage areas, or timing constraints for data collection.

"NW-side additional conditions" as used herein refers to aspects assumed for AI/ML model training and inference but not directly part of the UE's inherent capabilities. Some examples of "NW-side additional conditions" are the particular beam configurations, codebooks, or timestamp constraints that the network requires the UE to consider during measurement and model training.

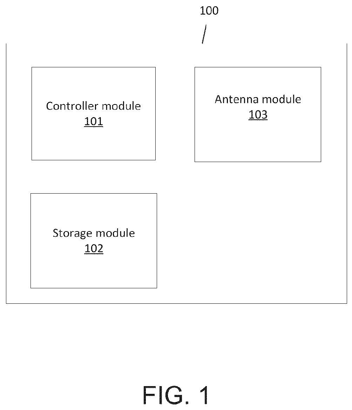

FIG. 1 illustrates a transmitting device or a receiving device in a communication system, according to an embodiment.

Referring to FIG. 1, the device 100 may function as a UE, such as a client device, or as a base station (gNB). The device 100 includes a controller module 101 (e.g., one or more processors), a storage module 102, and an antenna module 103, for executing AI/ML-related processes and signaling described herein.

The controller module 101 performs the primary processing tasks and manages device operations. It may include processors dedicated to specific tasks, such as digital signal processing (DSP), for handling signal conditioning, demodulation, synchronization, equalization, and other complex signal processing functions. These functions may be used for training and inference of AI/ML models related to beam management. The DSP may employ advanced computational techniques, such as fast Fourier transforms (FFT), inverse FFT (IFFT), and digital filtering, to ensure the reliability and accuracy of signals processed for AI/ML training and inference.

Additionally, the controller module 101 may include an application processor (AP) that executes software applications, including web browsing, media playback, and other interactive applications. Such processing capabilities support advanced functionalities that may use AI/ML insights to enhance user experience and NW efficiency.

The storage module 102 may include transitory or non-transitory memory for storing executable instructions, AI/ML models, training datasets, and various data required for NW condition validation procedures. The instructions stored may include those necessary for executing procedures described herein, such as requesting and validating associated IDs, managing measurement resources, and handling data collection during handovers. The storage module 102 may further incorporate a communication protocol stack, including layers such as physical (PHY), medium access control (MAC), radio link control (RLC), packet data convergence protocol (PDCP), and radio resource control (RRC).

The antenna module 103 may include one or multiple antennas responsible for transmitting and receiving wireless signals between the device 100 and other NW components such as UEs or gNBs. The antenna module 103 may receive wireless signals from base stations, convert these signals into electrical signals suitable for processing, and transmit data from the device to other nodes within the NW.

Embodiments disclosed herein provide a signaling and procedural framework to facilitate efficient data collection for training AI/ML models within wireless communication systems. Some embodiments may use associated IDs, which the UE uses to request data collection when specific pre-defined conditions are satisfied. Furthermore, to maintain the integrity and relevance of these NW-side additional conditions, various validation mechanisms are proposed, including the implementation of refresh timers, validity tags, and timestamps or tokens. These mechanisms enable the UE to verify the validity of NW-side conditions and manage associated IDs.

Various embodiments provide distinct signaling methods between the base station (gNB) and UE, allowing the UE to request initiation or termination of data collection configurations based on identified conditions. Also provided are procedures whereby the gNB communicates validation-related information to the UE, which can allow the UE to reset or release associated IDs once validation conditions have changed. Additionally, the UE may be equipped with specialized procedures to ascertain applicable AI/ML models or functionalities by interpreting received gNB configurations alongside associated IDs and validity indicators.

Moreover, some solutions enhance the robustness of AI/ML operations during handovers between cells or base stations. Specifically, the source gNB may communicate the current resource configuration and data collection requirements to the target gNB during a handover. The target gNB can either maintain the existing resource configuration or propose a new one, allowing the UE to either continue or reset its ongoing model training following the receipt of a handover command message.

The present disclosure relates to AI/ML models situated at the UE side, where these models may be trained directly within the device or on a server associated with the UE vendor. Beam management encompasses two primary sub-cases: spatial-domain downlink beam prediction, in which predictions for one set of beams (Set A) are based on measurement results from another set of beams (Set B); and temporal downlink beam prediction, where predictions for Set A beams are derived from historical measurements of Set B beams.

Beam configurations and patterns can vary significantly across different cells, depending on specific deployment strategies and operational objectives. Consequently, AI/ML models should be trained on data collected under NW configurations identical or closely related to those used during inference to ensure consistent and accurate performance.

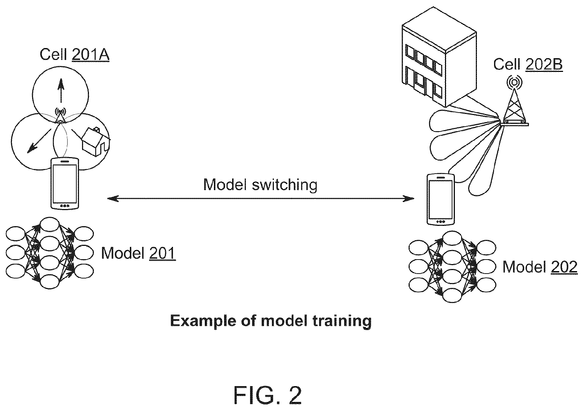

FIG. 2 illustrates an exemplary NW environment depicting UE-sided AI/ML model training with associated NW-side conditions, according to an embodiment.

Referring to FIG. 2, model 201 is trained with data specific to Cell 201A, which utilizes a distinct beam configuration. Conversely, model 202 is trained with data from Cell 202B, representing a different beam configuration. This difference in models is necessary because the optimal AI/ML model performance relies on consistency between training conditions (beam codebook, indexing, and mapping of Set A and Set B) and subsequent inference conditions within each respective cell.

To ensure the relevance and applicability of AI/ML models trained under varying conditions, one or more embodiments disclosed herein define NW-side additional conditions that supplement UE capabilities. The NW may provide such additional conditions via associated condition IDs supported by the base station (gNB), enabling the UE to accurately identify and utilize applicable AI/ML functionalities associated with each specific condition ID. Synchronization between the UE and gNB regarding these condition IDs ensures that both parties share a common understanding of the associated conditions.

Additionally, comprehensive performance monitoring procedures to improve lifecycle management (LCM) of AI/ML models may be used. This includes two measurement methodologies: the first (Type1) involves direct reporting of actual prediction results, such as layer 1 reference signal received power (L1-RSRP) and beam identifiers, whose data size varies according to measurement scope. The second (Type2) involves performance metrics or event-driven management decisions, where the UE calculates specific metrics and conveys these to the gNB, which may include relatively smaller data volumes and supports dynamic decision-making processes regarding model selection, activation, or deactivation.

The embodiments described herein address the challenge of maintaining consistency between AI/ML model training and inference by utilizing NW-side additional conditions represented through condition IDs. These condition IDs may either be globally unique or specific to individual cells or base stations (gNBs). In some systems, there may be uncertainty regarding which NW entity assigns these condition IDs and how precisely these IDs are linked to the respective NW-side additional conditions. Additionally, the manner in which the UE obtains the necessary datasets for model training tailored to a specific cell or gNB should be clearly defined.

To resolve these issues, detailed procedures and signaling mechanisms are provided. Specifically, a structured data collection procedure is proposed based on the use of condition IDs. When a UE requests data collection for training purposes, the gNB responds by providing resource configurations along with condition IDs. The UE may retain these condition IDs linked to the trained model even after releasing the RRC connection with the specific cell.

Further, to address changes in NW-side additional conditions, three validation methods are proposed. These include the use of a refresh timer, a validity tag, and a timestamp or token. Other validation methods can also be included. Such validation mechanisms ensure the continued accuracy and applicability of the trained models by allowing the UE to dynamically confirm whether NW-side conditions remain valid or require updates.

Moreover, to assist the UE in identifying applicable functionalities based on its AI/ML capabilities, the gNB may provide relevant condition IDs. The UE, upon receiving these IDs, determines appropriate functionalities and applicability-related information. A value tag or timestamp can additionally be employed to maintain the validity of the NW-side additional conditions.

Additionally, procedures and signaling mechanisms designed to support data collection continuity during handover events are also detailed. In these scenarios, the source gNB communicates the current resource configurations and associated data collection request information to the target gNB. The target gNB may choose to maintain the original resource configuration or allocate a different one. The UE, upon receiving a handover command, accordingly adjusts its model training processes, either continuing seamlessly or initiating a model reset, thus ensuring consistent and reliable performance across handovers.

The embodiments described herein provide mechanisms to ensure consistency between AI/ML model training and inference by enabling the NW to supply additional conditions. These NW-side additional conditions are communicated via condition IDs, which may be globally unique, cell-specific, or specific to particular base stations (gNBs). Based on these condition IDs, the UE can effectively determine the applicable AI/ML models trained under corresponding NW configurations.

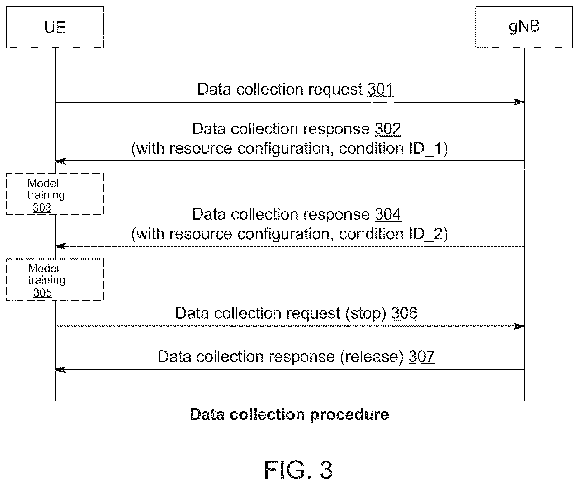

FIG. 3 illustrates signaling exchanges between a UE and a gNB for data collection, according to an embodiment.

Referring to FIG. 3, the UE initiates the procedure by sending a data collection request to the gNB in step 301. The initiation can be allowed or facilitated through NW signaling such as a system information block (SIB) or dedicated RRC signaling. Within this request, the UE may specify preferred time intervals or configurations, which may be indicated by the number of measurement occasions. Multiple scenarios could trigger this data collection request, including the absence of a trained model for the current cell, discrepancies between provided condition IDs and existing trained models, updated condition IDs due to changes in NW configuration, performance-based triggers (accuracy, link quality, beam prediction reliability of an AI/ML model), exceeding a model's valid training interval threshold, or requirements during handover procedures.

In response to the UE's request, the gNB provides resource configurations for performing measurements along with an associated condition ID (condition ID_1) in step 302. The configuration provided by the gNB may include CSI-RS for measuring Set B beams, and may also include CSI-RS providing ground truth data for Set A beams.

Subsequently, the UE conducts model training using the dataset acquired from the resources configured by the gNB in step 303. During ongoing data collection and training, NW configurations may change, prompting the gNB to send an updated data collection response that includes a new resource configuration and a new or modified condition ID (condition ID_2) in step 304. Following the reception of the updated configuration, the UE continues AI/ML model training utilizing the newly provided measurement dataset in step 305.

Once the model training is finalized, the UE maintains the condition ID and associated value tag linked to the trained model, even after the data collection session and RRC connection with the cell have ended. These identifiers are stored together with the specific cell identification, either physical cell ID or global cell ID, to facilitate future applicability verification.

Upon completion of the required training, the UE initiates termination of the data collection procedure by transmitting a request to stop data collection to the gNB in step 306. In response, the gNB acknowledges this request and releases the previously allocated measurement resources by sending a corresponding data collection response in step 307.

Various embodiments further address the validity of NW-side additional conditions, recognizing that the UE retains condition IDs even after transitioning into idle or inactive mode (e.g., such that a UE has released a dedicated configuration provided in connected mode) or performing handovers and cell reselections. To avoid prolonged and unnecessary storage of outdated models, several approaches are proposed to ensure the UE's stored models and associated condition IDs remain relevant and aligned with current NW configurations.

According to an embodiment, one approach involves the use of refresh timers, which enable the NW to instruct the UE when to discard trained models associated with specific condition IDs. Such refresh timers could be condition ID-specific, cell-specific, or PLMN-specific. In the case of a condition ID-specific timer, the UE initiates this timer immediately after completing model training or after requesting to release the resources previously allocated for data collection. Alternatively, cell-specific timers may be communicated via an SIB or through dedicated RRC signaling, prompting the UE to start the timer upon receiving this information. Additionally, a PLMN-specific timer might be delivered when the UE establishes a connection with the NW or could be predetermined within system specifications, thus starting whenever the UE connects to the corresponding NW or when the timer value is available.

According to another embodiment, value tags can be used. In this case, alongside condition IDs, the gNB provides a value tag, which can be condition ID-specific, cell-specific, or PLMN-specific. These value tags, transmitted via SIB or dedicated RRC signaling, allow the UE to detect changes in NW-side additional conditions. If the most recently received value tag differs from the UE's stored value tag, the UE can determine that the associated NW-side additional conditions have changed and consequently initiates a new data collection procedure.

According to another embodiment, the use of timestamps or tokens is also introduced as a mechanism to maintain the validity of stored condition IDs. The gNB may configure the UE to discard condition IDs if the corresponding NW-side additional conditions have been updated since model training. To facilitate this, the UE may record either the actual timestamp at the moment of model training or a token provided by the gNB during the initial resource allocation configuration for data collection. This recorded timestamp or token may serve as a reference, enabling the UE and NW to verify the continued applicability of the trained model relative to the current NW configurations.

According to an embodiment, a method to determine applicable functionalities based on condition IDs is provided. In this case, upon establishing an RRC connection, the base station (gNB) may indicate the supported NW-side additional conditions by transmitting a list of condition IDs to the UE. This initial communication step enables the UE to identify functionalities relevant for model inference that align with the provided condition IDs.

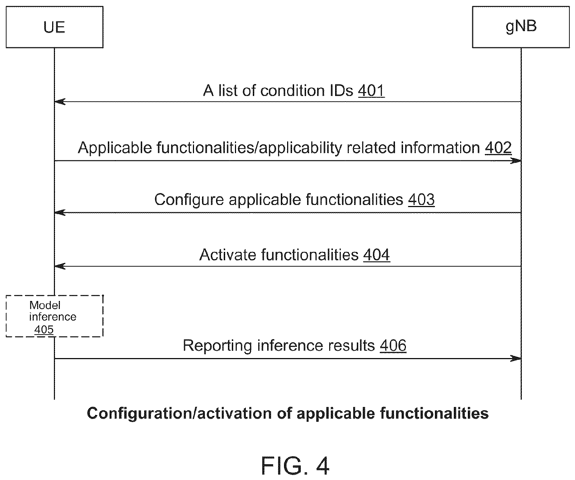

FIG. 4 illustrates signaling exchanges between a UE and a gNB for configuration and/or activation of applicable functionalities, according to an embodiment;

Referring to FIG. 4, the process begins with the gNB sending a list of condition IDs to the UE in step 401. This step may occur separately or jointly with the actual configuration of the AI/ML functionalities. Upon receiving these condition IDs, the UE assesses and identifies applicable functionalities, which correspond to models trained under the indicated NW-side additional conditions in step 402. In this evaluation, if a value tag is transmitted along with the condition IDs through an SIB or dedicated RRC signaling, the UE can compare this newly received value tag against previously stored values. Additionally, rather than identifying the functionalities, the UE may instead report applicability-related information, such as candidate beams for sets A or B, boundary conditions, or other relevant contextual parameters.

Subsequently, the gNB evaluates the functionalities or applicability-related information indicated by the UE to configure the applicable functionalities in step 403. After configuring these functionalities, the gNB activates one or multiple functionalities for actual use in model inference in step 404. Once activated, the UE performs model inference based on the activated functionalities, using the AI/ML models aligned with the configured condition IDs and value tags in step 405. Then, in step 406, the UE reports the inference results back to the gNB, enabling the NW to evaluate and further optimize the effectiveness of the activated AI/ML functionalities.

According to an embodiment, detailed procedures to manage data collection and AI/ML model training continuity during handover scenarios are provided. When a UE engaged in model training initiates handover to another cell, the UE may either suspend or continue data collection based on the similarity or difference in NW-side additional conditions between the source and target cells.

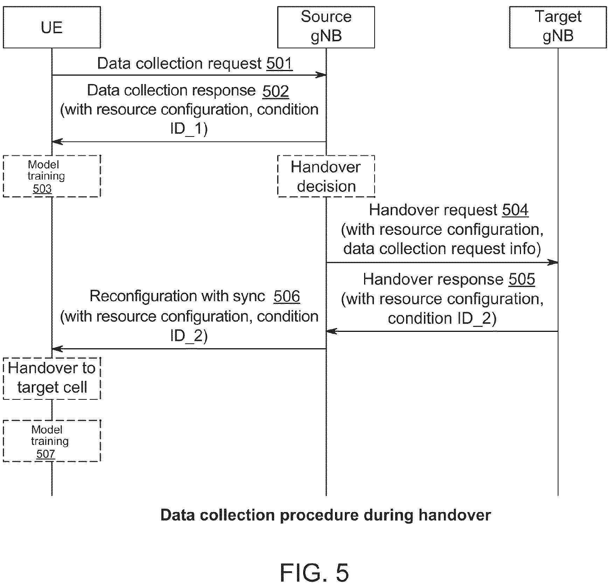

FIG. 5 illustrates signaling exchanges for an exemplary gNB handover scenario, according to an embodiment.

Referring to FIG. 5, the UE transmits a data collection request to the source gNB in step 501. The source gNB responds by providing a resource configuration along with an associated condition ID (condition ID_1) in step 502. The UE then performs model training using data collected according to this provided resource configuration in step 503.

If handover becomes necessary during ongoing training, the continuity of data collection may depend on the alignment of NW-side additional conditions between the source and target cells. If the configurations in the target cell match those of the source cell (or are within a predefined range), the UE can continue model training seamlessly based on the resource configuration provided by the target cell. To facilitate this, the source gNB should include the current data collection resource configuration and request information, originally provided by the UE, within the handover request message sent to the target gNB in step 504. The target gNB then assesses this information and communicates its decision to the source gNB via the handover response message, indicating either an identical or different resource configuration and potentially a new condition ID (condition ID_2) in step 505.

Due to the cell-specific nature of condition IDs, even if the NW-side additional conditions remain consistent, the target gNB may issue a distinct condition ID and an associated value tag. Consequently, the UE can associate and store multiple condition IDs and corresponding value tags with a single trained model if data collection spans multiple cells.

If the NW-side additional conditions differ between the source and target cells, either the source or target gNB may indicate whether existing data collection resources should be released and new resources allocated. Following handover, the UE can initiate training of a new AI/ML model with data collected in the target cell, reflecting the changed conditions. If the source gNB does not provide the UE's original data collection request information to the target gNB, the UE itself can initiate a new data collection request directly to the target gNB after completing the handover.

In step 506, the source gNB transmits the handover message (reconfiguration with synchronization information) to the UE, detailing the target cell's finalized resource configuration and relevant condition ID. Upon successful handover, the UE either continues model training with the newly provided resources or resets the model training process based on the extent of configuration changes in step 507. If the target cell configuration aligns closely with the source cell's, the UE may choose to continue training the existing model, associating both source and target cell condition IDs. Alternatively, substantial differences in resource configurations may prompt the UE to reset model training.

Additionally, some embodiments may involve incomplete signaling or procedures. For example, data collection may be initiated by the NW without an explicit UE request. Furthermore, the NW could explicitly release associated condition IDs without transmitting corresponding validity information such as timers, tags, or timestamps.

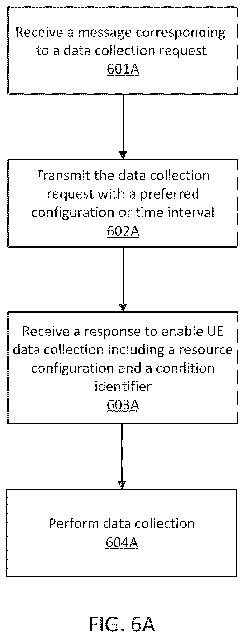

FIG. 6A is a flowchart illustrating a method performed by a UE for beam management model training, according to an embodiment.

Referring to FIG. 6A, in step 601A, the UE receives a message from a base station (gNB) corresponding to a data collection request by the UE (e.g., a message that enables the UE to initiate a data collection request). This message may be provided via an SIB or through dedicated RRC signaling, and may serve as a trigger for the UE to begin its decision-making process regarding whether data collection is needed. After receiving this message, the UE may determine that data collection is appropriate based on conditions such as the absence of a trained model, expiration of a training interval, mismatch between a stored and received value tag, or a pending handover.

In step 602A, the UE transmits a data collection request to the base station, which may include a preferred configuration or desired time interval for measurement. This request may provide the NW with context to allocate appropriate measurement resources tailored to the UE's configuration or state.

In response to the request, in step 603A, the UE receives a response message to enable UE data collection including a resource configuration and a condition identifier. The resource configuration may define specific measurement parameters, such as CSI-RS or other reference signals, while the condition identifier may identify a set of NW-side additional conditions relevant to the AI/ML model.

In step 604A, the UE performs data collection by measuring the resource configuration. The data collected under these parameters may be stored and used to train or update an AI/ML model that supports beam prediction or other processing tasks.

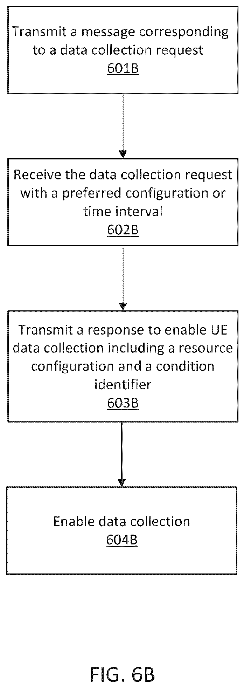

FIG. 6B is a flowchart illustrating a method performed by a base station for supporting beam management model training at a UE, according to an embodiment.

Referring to FIG. 6B, in step 601B, the base station transmits a message to the UE corresponding to a data collection request by the UE (e.g., a message that enables the UE to initiate a data collection request). This message may be provided via an SIB or through dedicated RRC signaling, and may define the context in which data collection can be initiated by the UE. The base station may broadcast or unicast this message as part of a larger configuration policy for managing AI/ML-based functionalities.

In step 602B, the base station receives a data collection request from the UE, which may include a preferred configuration or desired time interval for measurement. The request may provide context regarding the UE's configuration or current operational state, such as the absence of a previously trained model, expiration of a training interval, or other relevant performance-based conditions.

In step 603B, the base station transmits a response message to enable UE data collection including a resource configuration and a condition identifier. The resource configuration may specify one or more measurement parameters, such as CSI-RS or other reference signals, that the UE should use for collecting data. The condition identifier may reference a set of NW-side additional conditions applicable to the AI/ML model and may ensure consistency between training and inference.

In step 604B, the base station enables the UE to perform data collection by allowing the UE to measure the resource configuration (providing the information necessary for the UE to measure the designated resources). The collected data may then be used by the UE to train or update an AI/ML model. The base station may subsequently receive a release message from the UE indicating completion of training, at which point it may deallocate the measurement resources or update the validity of the condition identifier accordingly.

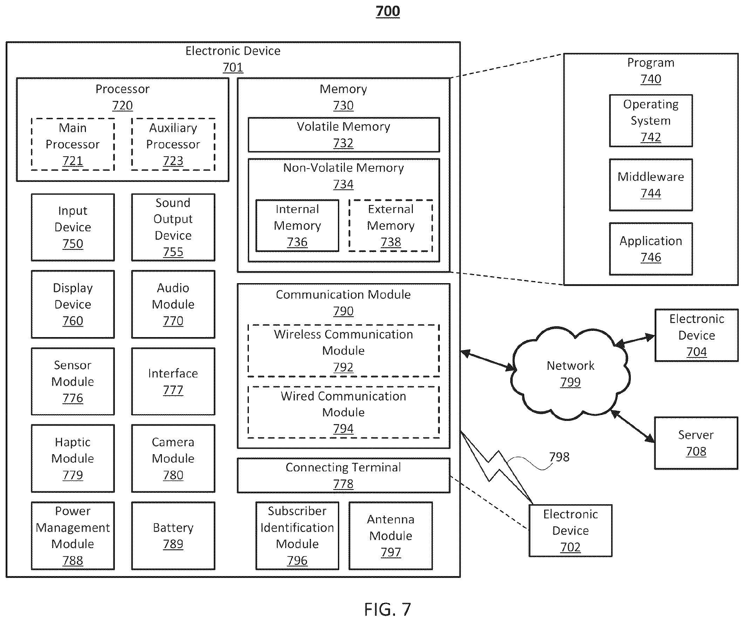

FIG. 7 is a block diagram of an electronic device in a NW environment, according to an embodiment.

FIG. 7 is a block diagram of an electronic device in a NW environment 700, according to an embodiment.

Referring to FIG. 7, an electronic device 701 in a NW environment 700 may communicate with an electronic device 702 via a first NW 798 (e.g., a short-range wireless communication NW), or an electronic device 704 or a server 708 via a second NW 799 (e.g., a long-range wireless communication NW). The electronic device 701 may communicate with the electronic device 704 via the server 708. The electronic device 701 may include a processor 720, a memory 730, an input device 750, a sound output device 755, a display device 760, an audio module 770, a sensor module 776, an interface 777, a haptic module 779, a camera module 780, a power management module 788, a battery 789, a communication module 790, a subscriber identification module (SIM) card 796, or an antenna module 797. In one embodiment, at least one (e.g., the display device 760 or the camera module 780) of the components may be omitted from the electronic device 701, or one or more other components may be added to the electronic device 701. Some of the components may be implemented as a single integrated circuit (IC). For example, the sensor module 776 (e.g., a fingerprint sensor, an iris sensor, or an illuminance sensor) may be embedded in the display device 760 (e.g., a display).

The processor 720 may execute software (e.g., a program 740) to control at least one other component (e.g., a hardware or a software component) of the electronic device 701 coupled with the processor 720 and may perform various data processing or computations.

As at least part of the data processing or computations, the processor 720 may load a command or data received from another component (e.g., the sensor module 776 or the communication module 790) in volatile memory 732, process the command or the data stored in the volatile memory 732, and store resulting data in non-volatile memory 734. The processor 720 may include a main processor 721 (e.g., a central processing unit (CPU) or an AP), and an auxiliary processor 723 (e.g., a graphics processing unit (GPU), an image signal processor (ISP), a sensor hub processor, or a communication processor (CP)) that is operable independently from, or in conjunction with, the main processor 721. Additionally or alternatively, the auxiliary processor 723 may be adapted to consume less power than the main processor 721, or execute a particular function. The auxiliary processor 723 may be implemented as being separate from, or a part of, the main processor 721.

In certain embodiments, the processor 720 is configured to implement procedures for requesting or receiving data collection configurations associated with one or more condition identifiers, as described herein. For instance, upon detecting specified conditions for AI/ML model training, the processor 720 may orchestrate signaling exchanges via the communication module 790 to send a data collection request to a base station, receive resource configurations, and manage data measurement tasks performed by the sensor module 776 or other components. Additionally, the memory 730 can store validity indicators for condition identifiers, allowing the processor 720 to determine whether an associated AI/ML model remains valid or requires discarding in response to changes in the NW-side additional conditions.

Accordingly, the processor 720 and memory 730, may thereby support the storage and execution of AI/ML model training data, model parameters, and condition identifiers. In particular, the main processor 721 or the auxiliary processor 723 can process beam-related measurements collected by the communication module 790 to train or update AI/ML models. The communication module 790, with the antenna module 797, can forward a release message to the NW upon completion of training.

The auxiliary processor 723 may control at least some of the functions or states related to at least one component (e.g., the display device 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). The auxiliary processor 723 (e.g., an image signal processor or a communication processor) may be implemented as part of another component (e.g., the camera module 780 or the communication module 790) functionally related to the auxiliary processor 723.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734. Non-volatile memory 734 may include internal memory 736 and/or external memory 738.

The program 740 may be stored in the memory 730 as software, and may include, for example, an operating system (OS) 742, middleware 744, or an application 746.

The input device 750 may receive a command or data to be used by another component (e.g., the processor 720) of the electronic device 701, from the outside (e.g., a user) of the electronic device 701. The input device 750 may include, for example, a microphone, a mouse, or a keyboard.

The sound output device 755 may output sound signals to the outside of the electronic device 701. The sound output device 755 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 760 may visually provide information to the outside (e.g., a user) of the electronic device 701. The display device 760 may include, for example, a display, a hologram device, or a projector and control circuitry to control a corresponding one of the display, hologram device, and projector. The display device 760 may include touch circuitry adapted to detect a touch, or sensor circuitry (e.g., a pressure sensor) adapted to measure the intensity of force incurred by the touch.

The audio module 770 may convert a sound into an electrical signal and vice versa. The audio module 770 may obtain the sound via the input device 750 or output the sound via the sound output device 755 or a headphone of an external electronic device 702 directly (e.g., wired) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. The sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device 702 directly (e.g., wired) or wirelessly. The interface 777 may include, for example, a high- definition multimedia interface (HDMI), a universal serial bus (USB) interface, a secure digital (SD) card interface, or an audio interface.

A connecting terminal 778 may include a connector via which the electronic device 701 may be physically connected with the external electronic device 702. The connecting terminal 778 may include, for example, an HDMI connector, a USB connector, an SD card connector, or an audio connector (e.g., a headphone connector).

The haptic module 779 may convert an electrical signal into a mechanical stimulus (e.g., a vibration or a movement) or an electrical stimulus which may be recognized by a user via tactile sensation or kinesthetic sensation. The haptic module 779 may include, for example, a motor, a piezoelectric element, or an electrical stimulator.

The camera module 780 may capture a still image or moving images. The camera module 780 may include one or more lenses, image sensors, image signal processors, or flashes. The power management module 788 may manage power supplied to the electronic device 701. The power management module 788 may be implemented as at least part of, for example, a power management integrated circuit (PMIC).

The battery 789 may supply power to at least one component of the electronic device 701. The battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the AP) and supports a direct (e.g., wired) communication or a wireless communication. The communication module 790 may include a wireless communication module 792 (e.g., a cellular communication module, a short-range wireless communication module, or a global navigation satellite system (GNSS) communication module) or a wired communication module 794 (e.g., a local area NW (LAN) communication module or a power line communication (PLC) module). A corresponding one of these communication modules may communicate with the external electronic device via the first NW 798 (e.g., a short-range communication NW, such as BLUETOOTH^{™}, wireless-fidelity (Wi-Fi) direct, or a standard of the Infrared Data Association (IrDA)) or the second NW 799 (e.g., a long-range communication NW, such as a cellular NW, the Internet, or a computer NW (e.g., LAN or wide area NW (WAN)). These various types of communication modules may be implemented as a single component (e.g., a single IC), or may be implemented as multiple components (e.g., multiple ICs) that are separate from each other. The wireless communication module 792 may identify and authenticate the electronic device 701 in a communication NW, such as the first NW 798 or the second NW 799, using subscriber information (e.g., international mobile subscriber identity (IMSI)) stored in the subscriber identification module 796.

The antenna module 797 may transmit or receive a signal or power to or from the outside (e.g., the external electronic device) of the electronic device 701. The antenna module 797 may include one or more antennas, and, therefrom, at least one antenna appropriate for a communication scheme used in the communication NW, such as the first NW 798 or the second NW 799, may be selected, for example, by the communication module 790 (e.g., the wireless communication module 792). The signal or the power may then be transmitted or received between the communication module 790 and the external electronic device via the selected at least one antenna.

Commands or data may be transmitted or received between the electronic device 701 and the external electronic device 704 via the server 708 coupled with the second NW 799. Each of the electronic devices 702 and 704 may be a device of a same type as, or a different type, from the electronic device 701. All or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 701. The electronic device 701 may provide the outcome, with or without further processing of the outcome, as at least part of a reply to the request. To that end, a cloud computing, distributed computing, or client-server computing technology may be used, for example.

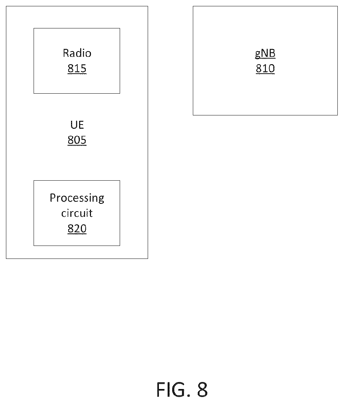

FIG. 8 is a system including a UE and a base station gNB, in communication with each other, according to an embodiment.

Referring to FIG. 8, the UE may include a radio 815 and a processing circuit (or a means for processing) 820, which may perform various methods disclosed herein, e.g., the method illustrated in FIGS. 3-6. For example, the processing circuit 820 may receive, via the radio 815, transmissions from the NW node (gNB) 810, and the processing circuit 820 may transmit, via the radio 815, signals to the gNB 810.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Additionally or alternatively, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method performed by a user equipment, UE, in a wireless communication system, the method comprising:
receiving, from a base station, a message corresponding to a data collection request by the UE;
transmitting, to the base station, the data collection request with, at least one of, a preferred configuration or time interval;
receiving, from the base station, a response to enable UE data collection including a resource configuration and a condition identifier in response to the data collection request; and
performing data collection by measuring the resource configuration.

2. The method of claim 1, wherein the data collection request is transmitted to the base station based on at least one of:
an absence of a trained model,
a mismatch between a received value tag and a previously stored value tag,
a performance monitoring value,
an expiration of a threshold time after model training, or
a handover event.

3. The method of claim 1 or 2, further comprising storing the condition identifier and, in response to the condition identifier being configured, storing validity information associated with the condition identifier in a case in which the UE is in an idle mode, in an inactive mode, performs a handover, or performs a cell reselection.

4. The method of any one of claims 1 to 3, wherein the resource configuration includes at least one reference signal for collecting beam measurements or validity information associated with the condition identifier.

5. The method of any one of claims 1 to 4, further comprising transmitting, to the base station, a message to request a stop of the data collection, and releasing the resource configuration upon completion of model training.

6. The method of any one of claims 1 to 5, further comprising discarding or refreshing a trained model associated with the at least one condition identifier when a determination is made that a network-side additional condition is invalid.

7. The method of claim 6, wherein the determination is based on at least one of a refresh timer, a value tag, or a timestamp.

8. The method of any one of claims 1 to 7, further comprising:
performing a handover from the base station to another base station; and
receiving, from the other base station, an indication of whether the resource configuration has changed.

9. The method of claim 8, wherein multiple condition identifiers are associated with a trained model when the resource configuration is not changed.

10. A method performed by a base station in a wireless communication system, the method comprising:
transmitting, to a user equipment, UE, a message corresponding to a data collection request by the UE;
receiving, from the UE, the data collection request with at least one of a preferred configuration or time interval;
transmitting, to the UE, a response to enable UE data collection including a resource configuration and a condition identifier in response to the data collection request; and
enabling data collection at the UE by measuring the resource configuration.

11. The method of claim 10, wherein the data collection request is received from the UE based on at least one of:
an absence of a trained model,
a mismatch between a received value tag and a previously stored value tag,
a performance monitoring value,
an expiration of a threshold time after model training, or
a handover event.

12. The method of claim 10 or 11, further comprising, in response to the condition identifier being configured for the UE, providing validity information associated with the condition identifier in a case in which the UE is in an idle mode, in an inactive mode, performs a handover, or performs a cell reselection.

13. The method of any one of claims 10 to 12, wherein the resource configuration includes at least one reference signal for collecting beam measurements or validity information associated with the condition identifier at the UE.

14. The method of any one of claims 10 to 13, further comprising receiving, from the UE, a message to request a stop of the data collection, and releasing the resource configuration upon completion of model training performed by the UE.

15. The method of any one of claims 10 to 14, further comprising indicating whether the UE should discard or refresh a trained model associated with the at least one condition identifier when a determination is made that a network-side additional condition is invalid.
